## Europäisches Patentamt
## European Patent Office
## Office européen des brevets

(19)

(11) Publication number: **0 144 454**
**A2**

# EUROPEAN PATENT APPLICATION

(12)

(21) Application number: **83112207.2**

(51) Int. Cl.⁴: **H 02 P 7/62**

(22) Date of filing: **05.12.83**

(43) Date of publication of application:
**19.06.85 Bulletin 85/25**

(84) Designated Contracting States:
**AT BE CH DE FR GB IT LI LU NL SE**

(71) Applicant: **LICENCIA Talalmányokat Ertékesitö Vállalat**
**Bajcsy Zs. u. 16**
**H-1051 Budapest(HU)**

(72) Inventor: **Geszti, Peter**
**Kikelet utca 57**
**H-1125 Budapest(HU)**

(72) Inventor: **Pongo, Andreas**
**XII. utca 10**
**1172 Budapest(HU)**

(72) Inventor: **Solymoss, Endre**
**Budafoki ut 45**
**H-1111 Budapest(HU)**

(72) Inventor: **Peregrin, Laszlo Timar, Dr.**
**Hunyadi Janos ut 7**
**H-1011 Budapest(HU)**

(74) Representative: **Lehn, Werner, Dipl.-Ing. et al,**
**Hoffmann, Eitle & Partner Patentanwälte Arabellastrasse**
**4 (Sternhaus)**
**D-8000 München 81(DE)**

(54) Method and apparatus for switching three-phase loads with an ohmic-inductive character, in particular asynchronous machines and transformers to the mains.

(57) The invention relates to the control of the switching process of three phase loads with ohmic-inductiv caracter, particularly asynchronous machines wherein the phase of the mains voltages is observed and for switching the phases controllable switching elements are used. According to the invented method one phase voltage is selected, and following a switch-on order in a vicinity of a zero-crossing of it a line voltage represented by the difference of the other two phase voltages is connected, and observing the connected line voltage in the vicinity of a very-next zero-crossing of it the selected and remaining phase voltage is switched on.

An apparatus for realizing the process comprises controllable switching elements (2) inserted in at least two phase-lines (A,B) and provided with a triggering unit (3), a comparator unit (5) and a mains voltage converter (4) for detection of zero-crossings. The comparator unit (5) is connected to the three-phase mains via the mains voltage converter (4) and a logic unit (6) for controlling the proper time sequence of the switching process is provided. The logic unit (6) is connected to inputs (5a, 5b) of the comparator unit (5), and its outputs (6a, 6b) are connected to the triggering units (3) controlling the switching elements (2). The logic unit (6) has further inputs for switching in and out the load.

./...

Fig. 2

METHOD  AND APPARATUS FOR SWITCHING THREE-PHASE LOADS
WITH AN OHMIC-INDUCTIVE CHARACTER, IN PARTICULAR
ASYNCHRONOUS MACHINES AND TRANSFORMERS TO THE MAINS

The invention relates to a method for connecting
three-phase loads with an ohmic-inductive  character,
in particular asynchronous machines and transformers to
the mains, as well as to  an apparatus for realizing the
method according to the invention.

For switching asynchronous motors mostly electromechanic switches ( e.g. contactors ) have been used,
but switches with semi-conductors are also well-known.

The ideal electromechanic switch switches theoretically
simultaneously - i.e. symmetrically - the phases. In
course of switching beside the quasi-stationary moments
swinging moments with a frequency of the mains may also
occur, being present also during mechanical transient
(running up), while their magnitude may exceed  the quasi-
stationary moment and as consequence for a short period
negative - braking - moments may also appear.

As a consequence of switching transient current peaks
also occur considerably loading the mains for short time
and subject the motor to a significant dynamic load.

Electromagnetic switches operate as interrupter switches
while the motor is switched-off. Meanwhile an arc appears,
causing high-frequency disturbances and contact reduction.

With industrially realized electromechanic switches
switching is performed in a random order of sequence, not
simultaneously in all phases, while closing of the contacts
is not at all free of bounces contaminating the mains with
high-frequency disturbances

Not-simultaneous random phase-switching influences the
magnitude of swinging moments and transient current peaks as
well, they can be increased, however, compared to  symmetrical
switching, in certain cases they can be reduced. Occurance
of increase or decrease is of random character, with electromechanic switches it cannot be influenced.

Number of achievable switchings of electromechanic
switches are considerably influenced by the conditions of  the
application ( vibration, polluted enviroment, arcing due to
short-lasting voltage drop-out etc. )

With the development of technology   different switching apparatuses using SCRs (containing thyristors, triacs
and solid state relays) have been available in commerce. These
consist of mechanic respectively electromechanic switches
as safety disconnect switches and units on SCR-basis performing actual switching. These switches ensure long-lasting reliable operation without the disadvantages of the switching
apparatuses containing moving parts.

Said switching apparatuses available in commerce have
been produced mainly for single-phase loads with an ohmic
character. In this case zero-voltage switching control (zero-
cross function) is preferred. Electromagnetic interference
(EMI) is considerably decreased.

Producers do not inform about switching apparatuses
ensuring advantageous switching circumstances for three-phase
motoric loads. In the publication of SIEMENS "Technische
Mitteilung aus dem Bereich Bauelemente Wechelstrom und Dreh-
strom - Steurung mit Triacs und Diacs" different versions
of switching apparatuses for simultaneous symmetrical switching
are to be found. Moment swingings and transient current peaks
generated by them are identical with those having been described in connection with simultaneous switching with electromechanic switches.

Although in the publications International Rectifier:
SCR applications handbook and OMRON: Solid-State Relay Series,
apparatuses (solid-state contactors) and versions of switching
recommended for switching three-phase induction machines are
dealt with, but without mentioning disadvantageous effects
of simultaneous switching of the three phases or trying to
find possibilities of elimination.

If a three-phase machine is switched by means of solid-
state relays described in the above publication with zero-
cross function, moment swings and current peaks will be even
more disadvantageous, than in case of symmetrical switching.

The invention as claimed is intended to remedy the
above drawbacks. It solves the problem of how to switch an
inductiv-ohmic character load to the mains in order to eliminate disadvantageous moment a current transients, and how
to design an apparatus for that switching process. Moment
swings arising at switching asynchronous motors are considerably loading the motor, the driven machine and the mechanic moment transmission inbetween (clutch, toothed gears etc.). Transient current peaks occuring at switching are adversely influencing the machine ( even transformers) and the mains. The reason for these detrimental effects is the DC flux component arising in the machine under the influence of switching, which depends on the relation of the time and order of sequence of switching of the single phases to the phase of the mains. Asymmetrical switchings may be more or less advantageous, than with symmetrical switching. Out of the realizable non-simultaneous switching processes the one resulting in the lowest DC flux component is to be considered as the most advantageous from the point of view of formation of moment swings and current peaks, which is provided by the invention.

The solution according to the invention is based on the recognition, supposed, that in course of connecting the inductive-ohmic loads to the mains a synchronized switching process is applied and controllable semi-conductor switching elements are used, not only the switching process itself can be relieved of detrimental additional phenomena, but by influencing the effects of switching, most advantageous effects on the electric machine can be obtained.

Moment swing and current peak will namely considerably decrease without the necessitiy to reduce the effective moment being useful from the point of view of acceleration ( e.g. by reducing supply voltage) .

Accordingly, the invention relates to the control of any kind of switching process (putting in circuit, reversing the sense of rotation, pole-number changing) from the point of view of the occurence of current transient and moment swing in case of three-phase electric machines ( the transformer being a static electric machine ), in particular of asynchronous motors.

The method for switching three-phase ohmic-inductive loads according to the invention can be characterized
as in claims 1 and 2 , and the apparatus for realizing
the process as in claims 3 and 4.

The invention will be described with reference to the
attached drawings showing the principle of the process and
exemplary embodiments, in which:

Fig. 1  shows the principle of the switching process
with the time-sequence of switching points
and their relations to each other and to a
switch in and out signal;

Fig. 2  shows the diagram  of a circuit arrangement
including the apparatus for realizing the
method according to the invention;

Fig. 3  shows the diagram of a circuit arrangement
for a motor with two winding of two different
pole numbers allowing the change of pole
numbers ;

Fig. 4  shows the diagram of a circuit arrangement
for reversing the sense of rotation of a
three-phase asynchronous motor.

Fig. 5. shows a more detailed embodyment of the invented apparatus according to Fig. 2.

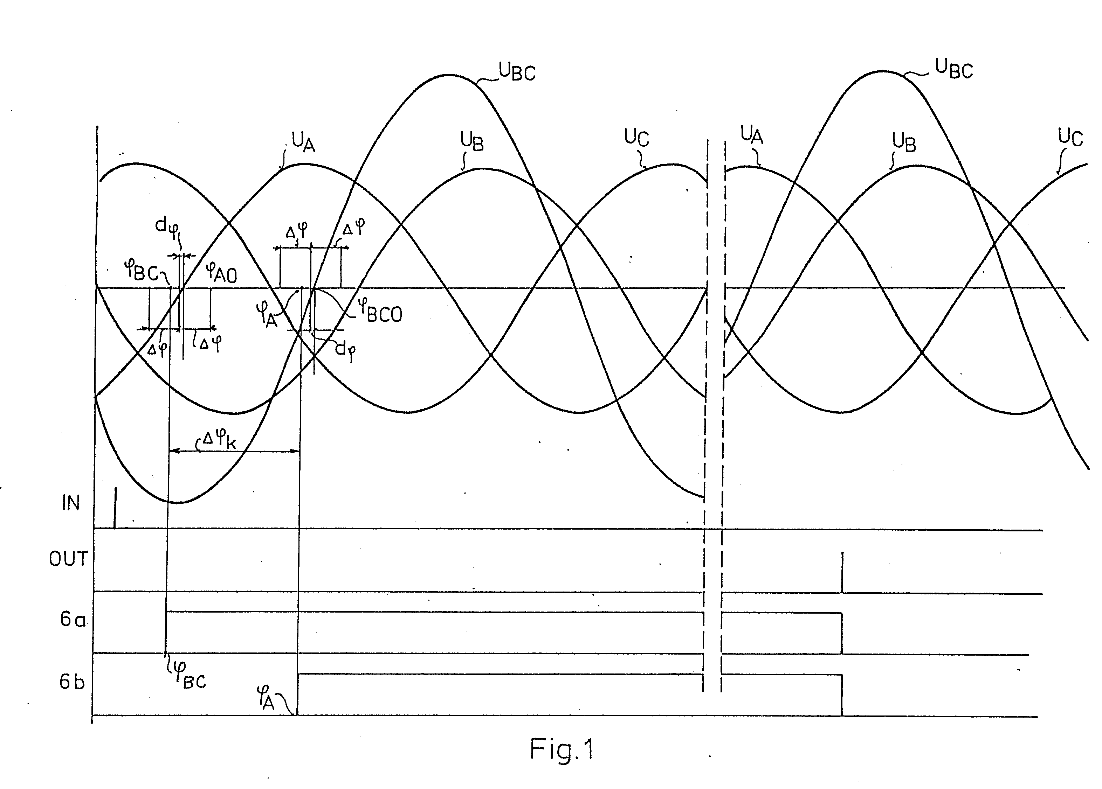

The invention can be characterized in that switching-
on in the three phases is not performed simultaneously, as
it becomes obvious from the following (figure 1) . The $\varphi_{AO}$
zero-crossing of the phase $\underline{A}$ produces the connection of the
line-voltage $U_{BC}$ in the connecting phase $\varphi_{BC}$, while the
zero-crossing $\varphi_{BCO}$ of the line-voltage $U_{BC}$ arriving with
a delay of a quarter of the mains period produces switching-
on of the phase $\underline{A}$ in the switching phase $\varphi_A$. The phase
lag $\Delta\varphi_k$ between the two switchings amounts to about $90°$.
The ranges of the switching phases $\varphi_{BC}$ and $\varphi_A$ are defined
by the following expressions:

$$\varphi_{AO} - d\varphi - \Delta\varphi \leq \varphi_{BC} \leq \varphi_{AO} - d\varphi + \Delta\varphi \qquad (I)$$

$$\varphi_{BCO} - d\varphi - \Delta\varphi \leq \varphi_A \leq \varphi_{BCO} - d\varphi + \Delta\varphi \qquad (II)$$

$$\Delta\varphi = 20° \qquad (III)$$

Transient processes of pole-number changing and reversing sense of rotation of three-phase asynchronous machines can be led back to the realization of electromagnetic transient processes of switching-on and -off in a proper order of sequence, accordingly, realization of the invention will be specified by detailing switch-on and switch-off transients, respectively.

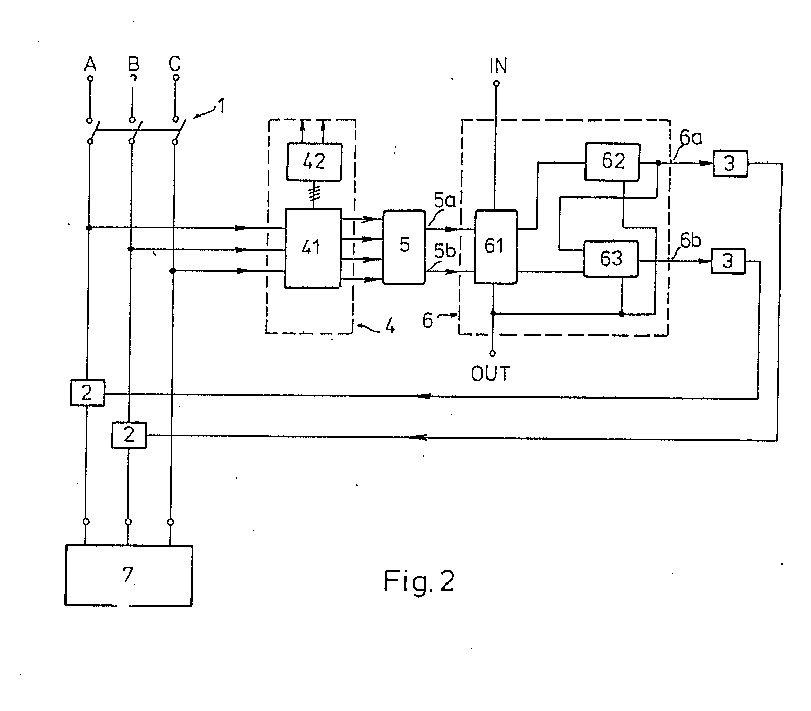

The invention will be described with reference to the circuit arrangement with the apparatus to be seen in figure 2. In the apparatus using semi-conductor ('SCR) switching elements performing switching-on and -off, respectively, units marked with 4, 5 and 6 are a control part. Connection sequence of the mains in points $\underline{A}$, $\underline{B}$ and $\underline{C}$ can be optional. Between a motor 7 and the supply mains a disconnect switch 1 and two controllable switching elements 2 are arranged. This can be a pair of thyristors with ignition transformers, triac with an ignition transformer or a single-phase solid-state relay without zero-cross function. A driver 3 of the ignition transformer is designed to meet the ignition energy requirement of the thyristors and in compliance with the ignition transformer. During the duration of a logical signal arriving at its input an ignition pulse train appears on its output.(In case of the application of solid-state relays the unit 3 is a part of the relay. In this case the signals of the outputs 6a and 6b perform direct control) . A voltage converter 4 is including a microtransformer 41 with star-connection for three-phase supply voltage. With its low-voltage side it supplies AC/DC unit 42 generating DC supply voltage, and it supplies a comparator unit 5 with voltages being approximately in the same phase, as phase voltage $U_A$ and the line-voltage $U_{BC}$. Said comparator unit 5 comprises two zero- comparators. On an output 5a of it signal-transition is taking place in the connecting phase $\gamma_{BC}$, while on a second output 5b in the switching phase $\gamma_A$, when full

- 7 -

0144454

switch-on is to be performed. On outputs 6a and 6b of
the logic unit 6 pre-requisite of the appearance of
signal-transition starting from the basic state lies in
that out of the signal IN and OUT the signal IN should
arrive as a last signal. In its "disable" state a preparatory unit 61 does not allow to pass the signals of
the outputs 5a and 5b. On effect of the signal IN it gets
into "enable" state and leads the signal of the output
5a to a unit 62 controlling connection and the signal of
the output 5b to a unit 63 controlling full switch-on.
On the output 6a the signal begins, when after the signal
IN, the first signal-transition appears on the output 5a.
On the output 6b the signal begins when on the output 6a
a signal is already present and on the output 5b signal-
transition just appears.


Switching-on

Logic unit 6 does not give any output signal as long
as it is not enabled by the signal IN. (The signal IN can
be a contact-closing or a pulse of logical level.) In the
first connecting phase $\mathcal{T}_{BC}$ following said IN control,
generation of the signal begins on the output 6a which releases continous conduction of the controllable switching
element 2 having been arranged in the phase B. Following
this in the next $\mathcal{T}_A$ switching phase, generation of the
signal begins on the output 6b which releases continuous
conduction of the controllable switching element 2 having
been arranged in the phase A. With this action the switching
-on process is completed.


Switching-off

Under the influence of the signal OUT the logic unit
6 terminates the signals of the outputs 6a and 6b, the preparatory unit 61 gets into "disable" state, while the
units 62 and 63 return to their basic state. (The signal OUT
can be a contact-closing or a pulse of logic level. The OUT
signal input may be formed by a group of inputs having similar function staying in a logic OR connection with each other. ) The driver 3 of the ignition transformer do not forward any ignition pulse train to the controllable switching elements 2. When solid-state. relays are used, the outputs of the logic unit 6 suspend direct triggering. The currents flowing in the single phases are allowed to flow but to the next zero-crossing. By this action the motor 7 is switched-off.

Changing of pole-number

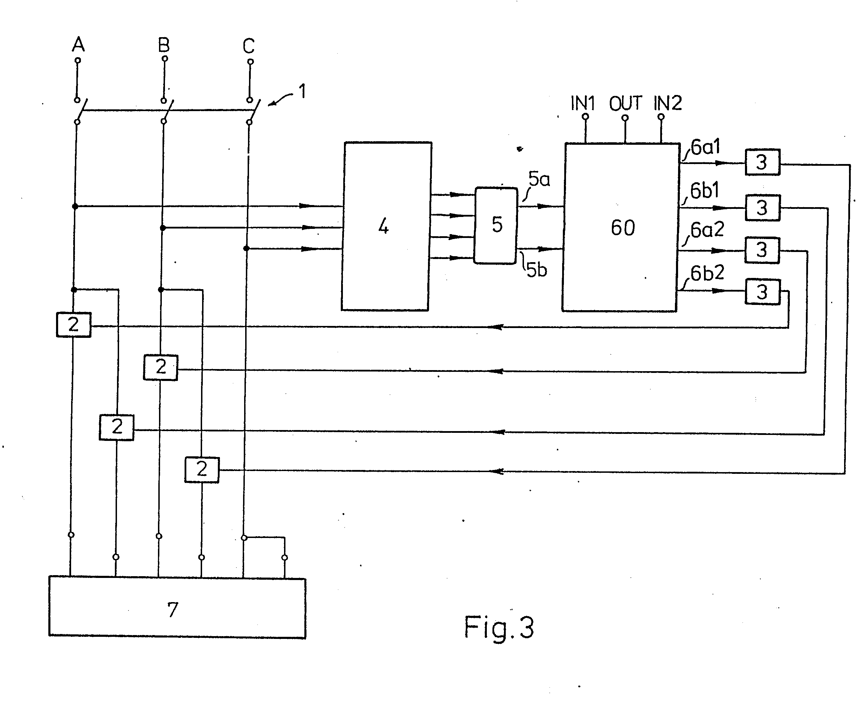

Figure 3 is showing the block schematic of a circuit arrangement including the invented apparatus designed for a motor 7 with two windings of different pole-numbers and a control unit. Function is based on the previously described operations of switching-on and switching-off, respectively. However, a difference lies in that switching-on is prepared by signals on inputs IN 1 and IN 2 in respect to the windings of the different pole-numbers. Relating to each other the signals on the inputs IN 1 and IN 2 result in pole-number changing. The signal OUT switches-off both switched-on states. It is the task of the logic unit to prevent simultaneous supply of the two windings. Accordingly, only signals on outputs 6a1 respectively 6b1 i.e. signals on outputs 6a2 i.e. 6b2 can simultaneously exist, so the output of the logic unit 60 are formed so, as to ensure cross-locking.

Reversing of the sense of rotation

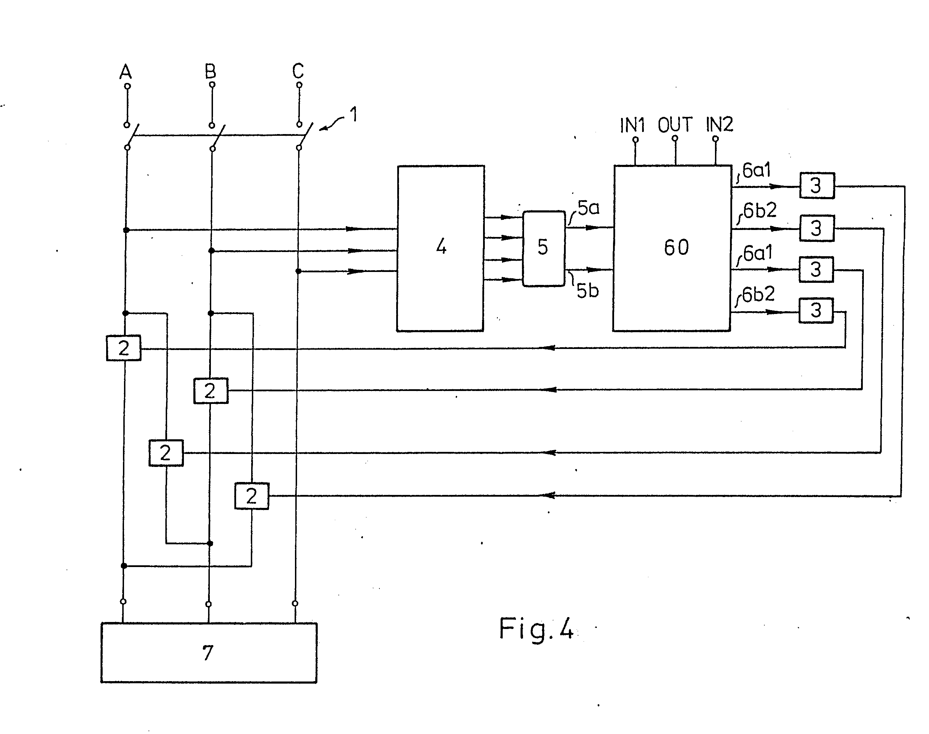

Figure 4 illustrates the block schematic of a circuit arrangement with the invented apparatus developed for a three-phase asynchronous motor to be operated in both senses of rotation. Construction of the apparatus is similar to the design of the apparatus developed for the pole-number changing.

The only difference is that the switching elements 2 are arranged in two different sequence between the mains phase wires A, B, C and the load 7. In respect to the operation in two senses of rotation the signals IN 1 and IN 2 prepare switching-on. In relation to each other the signals IN 1 and IN 2 result in reversing sense of rotation. Cross-locking is ensured as in the case of pole-number changing. The signal OUT switches-off current supply for both directions.

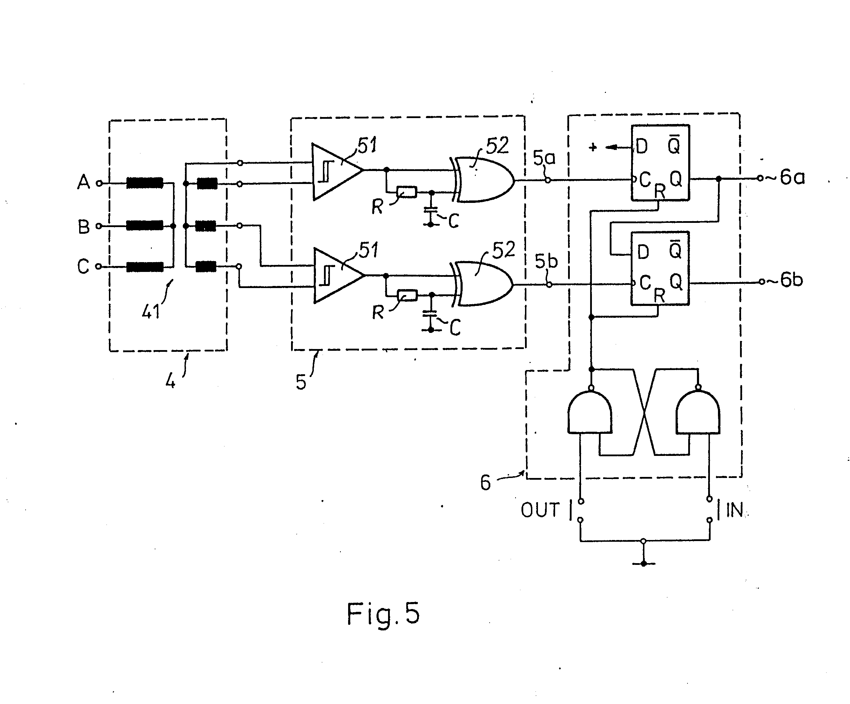

On the figure 5. a possible solution can be seen for **0144454**
the control-part of the apparatus. The microtransformer 41
has a star connection, creating a zero point. In the comparator unit 5 there are two identical comparators 51 with
hysteresis, and two EX-OR gates 52 with R-C elements
as one-shots operating in both directions. The logic unit
6 is constructed in a simple way by two D type flip-flops
and a static flip-flop formed by two NAND gates.

The effect of the realized asymmetrical switching
process on the fluxus formed in the machine is such, that
moment swings of the frequency of the mains are reduced
practically to zero; only the useful moment remains, ensuring a smooth mechanical transition, simultaneously con-
siderably reducing detrimental dynamic force effects arising
in curse of switching. In addition, as a further consequence,
transient surge of current is also significantly decreasing.

The solution according to the invention prolongates the
useful life of the motor and the mechanic device for the transfer of moment lying between motor and load and increases operational safety by reducing moment swings; useful life of the
winding of the machine is also prolongated, as dynamic forces
affecting the coilheads and resulting from the transient
current peak are also reduced.

The invented apparatus can be preferably used in cases,
when switching frequently takes place, at the same time a
protective operation is required, that means, that swing-moment
and load due to transient current are to be eliminated and
reduction of moment and current by reducing supply voltage is
either not permissible or cannot be solved.

Devices serving for overcurrent and thermal protection
of the machine can be connected directly to the logic control
unit 6. Disconnection following the operation of the protecting means may be produced by digital signals of logical
level too.

Furtheron the semi-conductor switching unit with the
invented apparatus is showing all the known advantages of
known switching apparatuses without moving components.

C L A I M S :                    0144454

1. Method  for the control of the switching process
of three-phase loads with ohmic-inductive character,
particularly asynchronous machines, wherein the phase of
the mains voltages is observed and for  switching the phases
controllable switching elements are used, c h a r a c t -
e r i z e d  in  that one phase voltage ($U_A$) is selected,
and following a switch-on order in a vicinity of a zero-
crossing ($\varphi_{AO}$) of it a line voltage ($U_{BC}$) represented by
the difference of the other two phase voltages ($U_B$, $U_C$) is
connected, and  observing the connected line voltage ($U_{BC}$)
in the vicinity of a very-next zero-crossing ($\varphi_{BCO}$) of it
the selected and remaining phase-voltage ($U_A$) is switched-on
for achieving full switch-on.

2. Method  as claimed in claim 1, wherein the vicinity
of said zero-crossings  ($\varphi_{AO}$, $\varphi_{BCO}$) is a phase-range ($2\Delta\varphi$)
having a center proceeding the zero-crossings ($\varphi_{AO}$, $\varphi_{BCO}$)
by a phase-difference ($d\varphi$), and said phase-difference ($d\varphi$)
is selected for $3^o$ when the load is a machine having a relative
supply-side ohmic resistance less, than 5% and the phase-
range ($2\Delta\varphi$) is  advantageously is kept within $40^o$, furtheron,
while the selected phase voltage ($U_A$) is applied to the load
in a switching-phase ($\varphi_A$) following the connection of the
line voltage ($U_{BC}$) in a connecting phase ($\varphi_{BC}$) delayed with
a phase-lag ($\Delta\varphi_k$) of about $90^o$.

3. Apparatus for realizing the method  according to
claim 1 or 2 comprising controllable switching elements
inserted in at least two phase-lines and provided with a
triggering unit, a comparator unit, and a mains voltage
converter for detection of zero-crossings, c h a r a c t -
e r i z e d  in that the comparator unit ( 5 ) is connected to
the three-phase mains via the mains voltage  converter ( 4 )
and a logic unit ( 6 ) for controlling the proper time sequence
of switching process is provided, its inputs are connected to
outputs (5a, 5b ) of the comparator unit ( 5 ) and its outputs ( 6a, 6b ) are connected to the triggering units ( 3 ) controlling the switching elements (2), and the logic unit ( 6 ) has further inputs for switching in and out the load.

4. Apparatus as claimed in claim 3, wherein the logic unit ( 6 ) has four outputs (6a1, 6b1, 6a2, 6b2 ) each connected to a trigger units( 3 )controlling four switching elements arranged to supply the load in any sense of rotation and/or at one of two different winding systems of different pole-numbers, where two pairs of the outputs ( 6a1, 6b1 cons. 6a2, 6b2 ) can be actuated by the corresponding inputs ( IN 1 cons. IN 2 ), where the pairs of outputs are in cross-lock connection.

0144454

Fig.1

Fig. 2

0144454

Fig. 3

Fig.4

0144454

Fig.5